# EUROPÄISCHE PATENTSCHRIFT

(11) **EP 2 307 777 B1**
(45) Veröffentlichungstag und Bekanntmachung des Hinweises auf die Patenterteilung: **12.09.2018**
(21) Anmeldenummer: 09772045.2
(22) Anmeldetag: 27.02.2009
(51) Int. Cl.: F16K 31/122

(54) **VENTIL**
VALVE
VALVE

(30) Priorität: 30.06.2008 DE 102008031024
(43) Veröffentlichungstag der Anmeldung: 13.04.2011
(73) Patentinhaber: WABCO GmbH, 30453 Hannover (DE)
(72) Erfinder: DIEKMEYER, Heinrich, 30890 Barsinghausen (DE); WILKEN, Christoph, 48499 Salzbergen (DE)
(74) Vertreter: Lauerwald, Jörg
(86) Internationale Anmeldenummer: PCT/EP2009/001398
(87) Internationale Veröffentlichungsnummer: WO 2010/000345

(56) Entgegenhaltungen:
- DE-B- 1 151 702
- FR-A- 1 346 796
- US-A- 3 064 675

## Beschreibung

Die Erfindung betrifft ein Ventil mit zweigeteilter Steuerkammer. Ein derartiges Ventil, welches z. B. als 2/2-Wegeventil ausgeführt sein kann, dient z. B. zur Steuerung des Druckmittelflusses zwischen einer Druckmittelquelle und einer Druckmittelsenke. Hierzu ist eine Einlasskammer des Ventils über einen Einlassanschluss mit der Druckmittelquelle verbunden und eine Auslasskammer des Ventils über einen Auslassanschluss mit der Druckmittelsenke verbunden. Das Ventil weist ein Stellmittel auf über den die Einlasskammer mit der Auslasskammer verbindbar oder absperrbar ist. In der Durchlassstellung ist die Einlasskammer mit der Auslasskammer und somit die Druckmittelquelle mit der Druckmittelsenke verbunden. In der Sperrstellung ist die Einlasskammer von der Auslasskammer und somit die Druckmittelquelle von der Druckmittelsenke getrennt.

Das Stellmittel wird üblicherweise durch einen Kolben realisiert. Die Steuerung des Kolbens erfolgt über eine Steuerkammer, die mit Druckmittel beaufschlagt werden kann. Über eine Steuerfläche des Kolbens kann Druckmittel auf den Kolben wirken und so eine Bewegung des Kolbens herbeiführen. Bei einer Ausführung eines derartigen Ventils, die auch als normal geschlossen bezeichnet wird, befindet sich das Ventil bei entlüfteter Steuerkammer in der Sperrstellung. Der Kolben wird durch eine Feder derart vorgespannt, dass kein Druckmittel von der Einlasskammer in die Auslasskammer fließen kann. Um das Ventil von der Sperrstellung in die Durchlassstellung zu bringen, ist die Beaufschlagung der Steuerkammer mit Druckmittel erforderlich. Bei einer Beaufschlagung der Steuerkammer mit Druckmittel wirkt das Druckmittel auf eine Steuerfläche des Kolbens wodurch der Kolben entgegen der Kraft der Feder bewegt wird und somit den Weg zwischen der Einlasskammer und der Auslasskammer freigibt, so dass Druckmittel von der Einlass- zu Auslasskammer fließen kann. Bei einer Beaufschlagung der Steuerkammer mit Druckmittel kann das Problem auftreten, dass der Kolben bedingt durch die Ansteuerung mit Druckmittel in Schwingungen versetzt wird, da der Kolben in Kombination mit der Feder ein schwingungsfähiges System darstellt. Diese Schwingungen sind unerwünscht, da sie zum einen Geräusche verursachen und zum anderen sogar zu einer Zerstörung des Ventils führen können. DE 1151702 offenbart ein pneumatisch betätigtes, mit Verzögerung arbeitendes, schlagartig ansprechendes Ventil, insbesondere zur zeitlich gestaffelten Steuerung der Bewegungsvorgänge an Druckluft-Leistungs- Schaltern, wobei der Druckluft-Antriebsraum gegenüber einem Kolbenraum durch eine Platte mit einer zentralen Bohrung getrennt ist, gegen die ein auf das Verschlussstück einwirkender Kolben durch eine sich am Boden des Kolbenraumes abstützende Feder gedrückt wird.

FR 1.346.796 A offenbart ein Stellventil mit einer zweigeteilten Steuerkammer, die Teile sind mittels einer Bohrung miteinander verbunden.

Der Erfindung liegt daher die Aufgabe zu Grunde, ein Ventil zur Verfügung zu stellen, bei dem Schwingungen des Kolbens oder Stellmittels bedingt durch die Ansteuerung mit Druckmittel vermieden werden.

Die Erfindung löst diese Aufgabe durch die in dem Anspruch 1 angegebenen Merkmale.

Die Erfindung sieht vor, die Steuerkammer in eine erste Kammer und eine zweite Kammer aufzuteilen, wobei die erste Kammer mit der zweiten Kammer verbunden ist. Durch die Aufteilung der Steuerkammer kommt es zu einer geschwindigkeitsabhängigen Dämpfung der Bewegung des Stellmittels im Falle einer Beaufschlagung der Steuerkammer mit Druckmittel. Die Dämpfung wird durch zwei Effekte erzielt. Zum einen wird das Druckmittel beim Übergang von der ersten in die zweite Kammer durch eine Drossel gebremst. Das Druckmittel wirkt somit nicht wie bei einer einteiligen Steuerkammer mit voller Energie auf die Steuerfläche des Stellmittels. Zum anderen entsteht bei einer Bewegung des Stellmittels ein Unterdruck in der der zweiten Kammer, da ein Druckausgleich zwischen der ersten und zweiten Kammer nicht entsprechend schnell erfolgen kann. Durch den Unterdruck wird eine Kraft auf das Stellmittel ausgeübt, die der Bewegung entgegenwirkt.

Durch die oben beschriebene Dämpfung werden Schwingungen des Stellmittels verhindert. Somit gestattet die Erfindung die Realisierung von geräuscharmen und robusten Ventilen.

Vorteilhafte Ausführungsformen der Erfindung ergeben sich aus den Unteransprüchen und aus den anhand der beigefügten Zeichnung näher erläuterten Ausführungsbeispielen. In der Zeichnung zeigt:
- Figur 1: einen Querschnitt eines aus dem Stand der Technik bekannten Ventils,
- Figur 2: einen Querschnitt einer Ausführungsform des erfindungsgemäßen Ventils und
- Figur 3: einen Querschnitt einer weiteren Ausführungsform des erfindungsgemäßen Ventils.

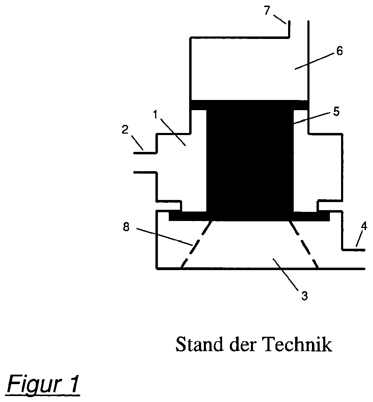

In Figur 1 ist der Querschnitt eines aus dem Stand der Technik bekannten Ventils dargestellt. Das Ventil dient zur Steuerung des Druckmittelsflusses zwischen einem Eingangsanschluss 2 und einem Ausgangsanschluss 4. Hierzu kann z. B. an dem Eingangsanschluss 2 eine Druckmittelquelle angeschlossen und der Ausgangsanschluss 4 mit einem Verbraucher verbunden werden. Über ein Stellmittel 5 kann eine Einlasskammer 1 mit einer Auslasskammer 3 verbunden oder getrennt werden. In der in Figur 1 gezeigten Stellung ist die Einlasskammer 1 von der Auslasskammer 3 getrennt, so dass kein Druckmittel von dem Eingangsanschluss 2 zu dem Ausgangsanschluss 4 fließen kann.

Die Steuerung des Stellmittels 5, welches durch einen Kolben 5 realisiert ist, erfolgt über eine Steuerkammer 6. Zur Steuerung des Stellmittels 5 kann die Steuerkammer 6 über einen Steuerkammeranschluss 7 mit einer Druckmittelquelle oder einer Druckmittelsenke verbunden werden. Die in Figur 1 gezeigte Stellung des Ventils entspricht einer Verbindung der Steuerkammer 6 mit einer Druckmittelsenke. Die Steuerkammer 6 ist entlüftet. Das Ventil befindet sich in seiner Sperrstellung, da das Stellmittel 5 durch eine Feder 8 derart vorgespannt wird, dass kein Druckmittel von der Einlasskammer 1 in die Auslasskammer 2 fließen kann.

Um das Ventil von der Sperrstellung in die Durchlassstellung zu bringen, ist die Beaufschlagung der Steuerkammer 6 mit Druckmittel erforderlich, d. h. der Steueranschluss 7 der Steuerkammer 6 wird mit einer Druckquelle verbunden. Bei einer Beaufschlagung der Steuerkammer 6 mit Druckmittel wirkt das Druckmittel auf eine Steuerfläche des Stellmittels 5 wodurch das Stellmittel 5 entgegen der Kraft der Feder 8 bewegt wird und somit den Weg zwischen der Einlasskammer 1 und der Auslasskammer 3 freigibt, so dass Druckmittel von der Einlasskammer 1 zu Auslasskammer 3 fließen kann.

Bei einer Beaufschlagung der Steuerkammer 6 mit Druckmittel kann das Problem auftreten, dass das Stellmittel 5 bedingt durch die Ansteuerung mit Druckmittel in Schwingungen versetzt wird, da das Stellmittel 5 in Kombination mit der Feder 8 ein schwingungsfähiges System darstellt. Diese Schwingungen sind unerwünscht, da sie zum einen Geräusche verursachen und zum anderen sogar zu einer Zerstörung des Ventils führen können.

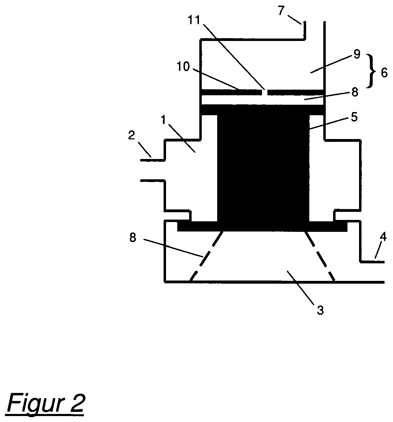

Figur 2 zeigt einen Querschnitt einer Ausführungsform des erfindungsgemäßen Ventils. Die grundsätzliche Funktionsweise des Ventils entspricht der oben beschriebenen Funktionsweise des in Figur 1 dargestellten Ventils, so dass an dieser Stelle auf eine separate Beschreibung der grundsätzlichen Funktionsweise verzichtet wird. Erfindungsgemäß ist vorgesehen, die Steuerkammer 6 des Ventils in eine erste Kammer 9 und eine zweite Kammer 8 aufzuteilen. Die Aufteilung der Steuerkammer erfolgt durch eine Blende 10. Über eine Öffnung 11 der Blende 10 ist die erste Kammer 9 mit der zweiten Kammer 8 verbunden. Die Blende 10 und die Öffnung 11 der Blende 10 sind so bemessen, dass sie als Drossel 10, 11 wirken. Die Wirkung der Drossel 10, 11 ist derart, dass bei Druckmittelbeaufschlagung der ersten Kammer 9 die in die erste Kammer 9 einströmende Druckluft gedrosselt in die zweite Kammer 8 gelangt, so dass Schwingungen des Stellmittels 5 vermieden werden.

Zur Steuerung des Stellmittels 5 ist die erste Kammer 9 mit einer Druckmittelquelle oder einer Druckmittelsenke verbindbar. Um das Ventil von seiner in Figur 2 gezeigten Sperrstellung in die Durchlassstellung zu bringen, ist die erste Kammer 9 mit Druckmittel zu beaufschlagen. Über die Öffnung 11 der Blende 10 gelangt das Druckmittel von der ersten Kammer 9 in die zweite Kammer 8. Das derart in die zweite Kammer 8 gelangte Druckmittel wirkt auf die Steuerfläche des Stellmittels 5 und bewirkt so eine Betätigung des Ventils von der Sperr- in die Durchlassstellung. Das Volumen der ersten Kammer 9 ist unabhängig von der Position des Stellmittels 5, wogegen das Volumen der zweiten Kammer 8 von der Position des Stellmittels abhängt. In der Durchlassstellung des Ventils ist das Volumen der zweiten Kammer 8 größer als in der Sperrstellung des Ventils.

Durch die Aufteilung der Steuerkammer 6 kommt es zu einer geschwindigkeitsabhängigen Dämpfung der Bewegung des Stellmittels 5 im Falle einer Beaufschlagung der Steuerkammer 6 mit Druckmittel. Die Dämpfung wird durch zwei Effekte erzielt. Zum einen wird das Druckmittel beim Übergang von der ersten Kammer 9 in die zweite Kammer 8 gebremst. Das Druckmittel wirkt somit nicht wie bei einer einteiligen Steuerkammer 6 mit voller Energie auf die Steuerfläche des Stellmittels 5. Zum anderen entsteht bei einer Bewegung des Stellmittels 5, welche größer als zum Kräfteausgleich zwischen Gas- und Federkraft notwendig ist (Schwingfall), ein Unterdruck in der der zweiten Kammer 8, da durch die Bewegung des Stellmittels 5 das Volumen der zweiten Kammer 8 vergrößert wird und ein Druckausgleich zwischen der ersten Kammer 9 und der zweiten Kammer 8 nicht entsprechend schnell erfolgen kann. Durch den Unterdruck wird eine Kraft auf das Stellmittel 5 ausgeübt, die der Bewegung entgegenwirkt.

Durch die oben beschriebene Dämpfung werden Schwingungen des Stellmittels 5 verhindert. Somit gestattet die Erfindung die Realisierung von geräuscharmen und robusten Ventilen.

Vorteilhafterweise sind die beiden Kammern 8, 9 so ausgebildet, dass das Volumen der zweiten Kammer 8 geringer als das der ersten Kammer 9 ist. Durch diese Ausführungen werden Schwingungen des Stellmittels 5 besonders effektiv verhindert.

Zur Unterstützung der Vermeidung von Schwingungen des Stellmittels 5 kann zusätzlich das Stellmittel 5 im Bereich der Auslasskammer 3 abgestuft sein, d. h. das Stellmittel 5 ist auf der seiner Steuerfläche entgegen gesetzten Seite abgestuft.

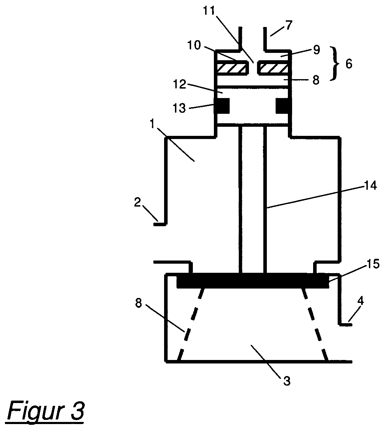

In Figur 3 ist eine Ausführungsform des erfindungsgemäßen Ventils dargestellt, die in Gas- oder Lufttrockner als Entlüftungs- oder Ablassventil verwendet werden kann. Gegenüber den Figur 1 und Figur 2 gezeigten Ventilen ist das Stellmittel 5 nicht durch einen einteiligen Kolben 5 sondern durch einen Kolbenkopf 12, der mit einer umlaufenden Dichtung 13 versehen, und über eine Kolbenstange 14 mit einer Druckplatte 15 verbunden ist, realisiert.

Ein Lufttrockner für ein Fahrzeugdruckluftsystem in dem das Ventil gemäß Figur 3 eingesetzt werden kann, ist in dem Dokument DE 11 2005 002 633 T5 beschrieben. In diesem Dokument wird das Entlüftungs- oder Ablassventil als Durchspülventil bezeichnet, welches mit dem Bezugszeichen 22 versehen ist. Das Durchspülventil wird insbesondere in den Absätzen [0024] und [0030] des Dokuments DE 11 2005 002 633 T5 beschreiben. Gemäß der Figuren 1 bis 3 und des Abschnittes [0024] dieses Dokumentes wird die Steuerkammer des Durchspülventils durch einen zylindrischen Abschnitt des Körpers gebildet, wobei in diesem Dokument der zylindrische Abschnitt mit dem Bezugszeichen 62 und der Körper mit dem Bezugszeichen 12 versehen ist. Gemäß der in der vorliegenden Anmeldung offenbarten Erfindung ist der zylindrische Abschnitt des Körpers und somit die Steuerkammer des Durchspülventils in zwei Kammern aufzuteilen.

Als weiter Beispiele für Komponenten/Geräte in denen das erfindungsgemäße Ventil zum Einsatz kommen kann sind Druckregler oder Druckluftversorgungseinrichtungen für Kraftfahrzeuge zu nennen. Eine solche Druckluftversorgungseinrichtung ist z. B. in dem Dokument DE 10 2006 035 772 A1 offenbart.

## Patentansprüche

1. Ventil mit mindestens einer Einlasskammer (1) und mindestens einer Auslasskammer (3), die über ein Stellmittel (5, 12, 13, 14, 15) miteinander verbindbar oder gegeneinander absperrbar sind, mit einer Steuerkammer (6) zur Steuerung des Stellmittels (5, 12, 13, 14, 15) von einer Sperr- in eine Durchlassstellung, wobei die Steuerkammer (6) in eine erste Kammer (9) und eine zweite Kammer (8) aufgeteilt ist, wobei die erste Kammer (9) und zweite Kammer (8) miteinander verbunden sind, wobei
die erste Kammer (9) und zweite Kammer (8) über eine Drossel (10, 11) miteinander verbunden sind, wobei
die Drossel (10, 11) derart bemessen ist, dass Schwingungen des Stellmittels (5, 12, 13, 14, 15) bei Druckbeaufschlagung der ersten Kammer (9) vermieden werden.

2. Ventil nach Anspruch 1, **dadurch gekennzeichnet, dass** die Aufteilung der Steuerkammer (6) durch eine Blende (10) erfolgt.

3. Ventil nach Anspruch 2, **dadurch gekennzeichnet, dass** eine Öffnung (11) der Blende (10) als Drosselöffnung (11) wirkt.

4. Ventil nach einem der vorherigen Ansprüche, **dadurch gekennzeichnet, dass** die erste Kammer (9) mit Druckmittel beaufschlagbar ist und das Volumen der zweiten Kammer (8) von der Position des Stellmittels (5, 12, 13, 14, 15) abhängig ist.

5. Ventil nach einem der vorherigen Ansprüche, **dadurch gekennzeichnet, dass** das Volumen der ersten Kammer (9) größer als das Volumen der zweiten Kammer (8) ist.

6. Ventil nach einem der vorherigen Ansprüche, **dadurch gekennzeichnet, dass** das Stellmittel (5, 12, 13, 14, 15) durch eine Feder (8) vorgespannt ist.

7. Ventil nach einem der vorherigen Ansprüche, **dadurch gekennzeichnet, dass** das Stellmittel (5, 12, 13, 14, 15) ein Kolben (5) ist.

8. Ventil nach einem der vorherigen Ansprüche, **dadurch gekennzeichnet, dass** das Stellmittel (5, 12, 13, 14, 15) im Bereich der Auslasskammer (3) abgestuft ist.

9. Ventil nach einem der vorherigen Ansprüche, **dadurch gekennzeichnet, dass** das Ventil beheizbar ist.

10. Gastrockner mit einem Ventil nach einem der vorherigen Ansprüche.

11. Druckregler mit einem Ventil nach einem der Ansprüche 1 bis 9.

12. Druckluftversorgungseinrichtung mit einem Ventil nach einem der Ansprüche 1 bis 9.

13. Druckmittelbetriebene Bremsanlage oder Luftfederanlage eines Fahrzeugs mit einem Ventil nach einem der Ansprüche 1 bis 9.

## Claims

1. Valve, comprising at least one inlet chamber (1) and at least one outlet chamber (3) which can be connected to one another or shut off from one another by means of a positioning means (5, 12, 13, 14, 15), and comprising a control chamber (6) for controlling the positioning means (5, 12, 13, 14, 15) from a shut-off position to a through-flow position, wherein the control chamber (6) is divided into a first chamber (9) and a second chamber (8), the first chamber (9) and the second chamber (8) being connected to one another, wherein the first chamber (9) and the second chamber (8) are connected to one another via a throttle (10, 11), wherein the throttle (10, 11) is dimensioned in such a manner that oscillation of the positioning means (5, 12, 13, 14, 15) is avoided during pressurization of the first chamber (9).

2. Valve according to Claim 1, **characterized in that** the division of the control chamber (6) is effected by a screen (10).

3. Valve according to Claim 2, **characterized in that** an aperture (11) of the screen (10) acts as the throttle opening (11).

4. Valve according to any one of the preceding claims, **characterized in that** the first chamber (9) can be subjected to pressure medium and the volume of the second chamber (8) is dependent on the position of the positioning means (5, 12, 13, 14, 15).

5. Valve according to any one of the preceding claims, **characterized in that** the volume of the first chamber (9) is greater than the volume of the second chamber (8).

6. Valve according to any one of the preceding claims, **characterized in that** the positioning means (5, 12, 13, 14, 15) is preloaded by a spring (8).

7. Valve according to any one of the preceding claims, **characterized in that** the positioning means (5, 12, 13, 14, 15) is a piston (5).

8. Valve according to any one of the preceding claims, **characterized in that** the positioning means (5, 12, 13, 14, 15) is stepped in the region of the outlet chamber (3).

9. Valve according to any one of the preceding claims, **characterized in that** the valve can be heated.

10. Gas dryer with a valve according to any one of the preceding claims.

11. Pressure regulator with a valve according to any one of Claims 1 to 9.

12. Compressed air supply device with a valve according to any one of Claims 1 to 9.

13. Compressed-air operated brake system or pneumatic suspension system of a vehicle with a valve according to any one of Claims 1 to 9.

## Revendications

1. Valve avec au moins une chambre d'admission (1) et au moins une chambre d'échappement (3), qui peuvent être raccordées l'une à l'autre ou séparées l'une de l'autre par un moyen de réglage (5, 12, 13, 14, 15), avec une chambre de commande (6) pour la commande du moyen de réglage (5, 12, 13, 14, 15) d'une position de fermeture à une position de passage, dans laquelle la chambre de commande (6) est divisée en une première chambre (9) et une seconde chambre (8), dans laquelle la première chambre (9) et la seconde chambre (8) sont raccordées l'une à l'autre, dans laquelle la première chambre (9) et la seconde chambre (8) sont raccordées l'une à l'autre par un étranglement (10, 11), dans laquelle l'étranglement (10, 11) est dimensionné de telle manière que des oscillations du moyen de réglage (5, 12, 13, 14, 15) soient évitées lors d'une mise sous pression de la première chambre (9).

2. Valve selon la revendication 1, **caractérisée en ce que** la division de la chambre de commande (6) est réalisée au moyen d'un diaphragme (10).

3. Valve selon la revendication 2, **caractérisée en ce qu'**un orifice (11) du diaphragme (10) agit comme orifice d'étranglement (11).

4. Valve selon l'une quelconque des revendications précédentes, **caractérisée en ce que** la première chambre (9) peut être soumise à un fluide sous pression et le volume de la seconde chambre (8) dépend de la position du moyen de réglage (5, 12, 13, 14, 15).

5. Valve selon l'une quelconque des revendications précédentes, **caractérisée en ce que** le volume de la première chambre (9) est plus grand que le volume de la seconde chambre (8).

6. Valve selon l'une quelconque des revendications précédentes, **caractérisée en ce que** le moyen de réglage (5, 12, 13, 14, 15) est précontraint au moyen d'un ressort (8).

7. Valve selon l'une quelconque des revendications précédentes, **caractérisée en ce que** le moyen de réglage (5, 12, 13, 14, 15) est un piston (5).

8. Valve selon l'une quelconque des revendications précédentes, **caractérisée en ce que** le moyen de réglage (5, 12, 13, 14, 15) est étagé dans la région de la chambre d'échappement (3).

9. Valve selon l'une quelconque des revendications précédentes, **caractérisée en ce que** la valve peut être chauffée.

10. Sécheur de gaz avec une valve selon l'une quelconque des revendications précédentes.

11. Régulateur de pression avec une valve selon l'une quelconque des revendications 1 à 9.

12. Dispositif d'alimentation en air comprimé avec une valve selon l'une quelconque des revendications 1 à 9.

13. Installation de freinage ou installation de suspension pneumatique d'un véhicule activée par un fluide sous pression avec une valve selon l'une quelconque des revendications 1 à 9.
